# FASCICULE DE BREVET EUROPEEN

(11) **EP 1 755 313 B1**
(45) Date de publication et mention de la délivrance du brevet: **21.01.2015**
(21) Numéro de dépôt: 06118444.6
(22) Date de dépôt: 04.08.2006
(51) Int. Cl.: H04L 29/08

(54) **Dispositif de controle de mise en oeuvre de fonctions au sein d'un équipement de service d'un coeur de réseau de communication internet**
Steuervorrichtung zum Ermöglichen von Funktionen in einer Dienstevorrichtung eines Internet-Kommunikationsnetzes
Control device for enabling functions of a service equipment within an internet communication network

(30) Priorité: 17.08.2005 FR 0552519
(43) Date de publication de la demande: 21.02.2007
(73) Titulaire: ALCATEL LUCENT, 92100 Boulogne-Billancourt (FR)
(72) Inventeur: Thiebaut, Laurent, 92160 Antony (FR); Queau, Guylaine, 91370 Verrières-le-Buisson (FR)
(74) Mandataire: El Manouni, Josiane

(56) Documents cités:
- WO-A-99/28805
- WO-A-2004/105412

## Description

L'invention concerne les réseaux de communication à coeur de réseau de type IP (pour « Internet Protocol »), et plus particulièrement l'accès de terminaux de communication à des services mis à la disposition de leurs utilisateurs par de tels réseaux.

On entend ici par « réseau de communication à coeur de réseau de type IP » aussi bien les réseaux IP de bout en bout dans lesquels l'usager dispose d'un lien IP, que les réseaux disposant d'un coeur de réseau de type IP auquel on accède par une autre technologie via une passerelle. De tels réseaux sont par exemple ceux qui s'appuient sur la technologie SIP (pour « Session Initiation Protocol »), comme par exemple les réseaux de type IMS (pour « IP Multimedia Subsystem » (3GPP)) ou MMD (pour « Multimédia Domain » (3GPP2)).

Par ailleurs, on entend ici par « terminal de communication » tout équipement de communication, radio ou filaire, fixe ou mobile (ou portable) capable de se connecter à au moins un réseau IP, éventuellement par l'intermédiaire de passerelle(s), afin d'échanger des données sous la forme de signaux avec un autre équipement. Il pourra donc s'agir, par exemple, d'un téléphone fixe ou mobile, ou d'un ordinateur fixe ou portable ou d'un assistant personnel numérique (ou PDA) équipé d'un module de communication, ou encore d'un serveur équipé d'un module de communication et pouvant éventuellement appartenir à l'opérateur délivrant le service et contenant une fonction d'agent utilisateur (ou « User Agent »).

Comme le sait l'homme de l'art, certains coeurs de réseau Internet comportent des équipements de service, comme par exemple des serveurs à fonction « proxy » (ou « proxy-SIP ») destinés principalement à un routage « intelligent » de la signalisation SIP, des serveurs d'application(s) (ou « application servers ») et des entités de type MRF (ou « Média Resources Function »), chargés de fournir à des terminaux (appelant(s) ou appelé(s)) des services relatifs à des communications. Parmi ces services, on peut notamment citer le service de pré-paiement, ou les services de type CMM (pour « Corporate Mobility Manager » - bureau virtuel), messagerie, conférence, portail, kiosque, téléchargement de sonneries ou « push to talk ».

Plus précisément, lorsqu'un terminal doit accéder à un service, à l'initiative de son utilisateur ou d'un coeur de réseau, il doit transmettre au réseau dont il est client une demande d'accès audit service. A réception de cette demande, le réseau la route au moyen d'un serveur proxy SIP par exemple vers le (ou l'un des) serveur(s) d'application(s) (ou « application server(s) ») dédié(s) (au moins) à ce service, c'est-à-dire chargé de gérer et contrôler la fourniture du service demandé au terminal demandeur.

On entend ici par « service » tout service relatif, au moins en partie, à une communication ayant pour objet l'échange de flux de données média sous toute forme, comme par exemple des flux de voix (VoIP pour « Voice over IP »), des flux vidéo ou des flux de textes (par exemple de type « chat »). Il est important de noter que les flux peuvent être interactifs, en temps réel ou non.

La fourniture de ces services requiert fréquemment la mise en oeuvre, par l'un des équipements de service impliqués dans un service de communication, d'une fonction complémentaire, comme par exemple (et non limitativement) la facturation (ou « charging »). Or, dans un même coeur de réseau, plusieurs équipements de service sont généralement en mesure de mettre en oeuvre une même fonction complémentaire. C'est notamment le cas de la fonction de facturation dite « en ligne » (ou « on-line ») permettant de joindre un serveur gérant en temps réel les crédits dont disposent des utilisateurs. Ainsi, dans un coeur de réseau les proxy SIP et certains serveurs d'application(s) sont capables de mettre en oeuvre la fonction de facturation en ligne.

L'inconvénient réside dans le fait que ni un proxy SIP ni un serveur d'application(s) ne peut savoir s'il doit mettre en oeuvre sa propre fonction complémentaire ou si c'est un autre équipement de service qui doit le faire. Actuellement, le proxy SIP, qui est en charge d'une communication, met systématiquement en oeuvre sa fonction complémentaire de facturation en ligne. Il arrive alors fréquemment que le serveur d'application(s), qu'il a invoqué pour fournir un service demandé, mette en oeuvre en parallèle sa propre fonction complémentaire de facturation en ligne. Cela peut entraîner des interférences. En outre, cela multiplie par deux les interactions (échanges de signalisation) avec le serveur gérant la facturation en ligne, et donc multiplie par deux les ressources de calcul (ou CPU) utilisées, tout en introduisant des retards d'établissement de session.

Il existe certes des solutions propriétaires consistant à mettre à la disposition des équipements de service, tels que des proxy SIP, des tables locales précisant quels serveurs d'application(s) sont aptes à mettre en oeuvre des fonctions complémentaires. Mais, chaque fois qu'un nouveau service est offert par un coeur de réseau (et donc qu'un nouveau serveur d'application(s) est adjoint à ce coeur de réseau) ou qu'une nouvelle version d'un serveur d'application(s) est adjointe au coeur de réseau, il est nécessaire de mettre à jour les tables locales de chaque proxy SIP, ce qui nécessite une coordination des opérations de maintenance (ou OAM). En outre, si un serveur d'application(s), chargé de mettre en oeuvre une fonction complémentaire, se retire d'une session, le proxy SIP n'est pas en mesure de se substituer à lui pour mettre en oeuvre cette fonction complémentaire.

Le document D1 = WO 2004/105412 décrit un dispositif de controle qui décide quel élément de réseau va implementer une fonction demandée.

Aucune solution connue n'apportant une entière satisfaction, l'invention a donc pour but d'améliorer la situation.

Elle propose à cet effet un dispositif de contrôle pour un équipement de service destiné à mettre en oeuvre, au sein d'un coeur de réseau de communication Internet, des fonctions liées à la fourniture d'au moins un service de communication à au moins un terminal de communication (appelant ou appelé).

Ce dispositif de contrôle se caractérise par le fait qu'il comprend des moyens de contrôle chargés, en cas de réception d'une demande de fourniture du service (offert par l'équipement) pour une communication donnée (d'une session entre terminaux appelant et appelé), de décider (ou de refuser) de mettre en oeuvre au moins une fonction choisie parmi les fonctions assurées par l'équipement, puis d'insérer dans la signalisation (c'est-à-dire dans l'un au moins des messages de signalisation) émise par l'équipement pour cette communication (ou session) des données d'information signalant cette décision (de mise en oeuvre de chaque fonction choisie par l'équipement) à destination d'au moins certains autres équipements de service du coeur de réseau, afin qu'ils s'interdisent de mettre en oeuvre la fonction choisie pendant la durée de la communication donnée.

Le dispositif selon l'invention peut comporter d'autres caractéristiques qui peuvent être prises séparément ou en combinaison, et notamment :
- les autres équipements de service du coeur de réseau qui interprètent ces données d'information signalant cette décision (de mise en oeuvre de chaque fonction choisie par l'équipement) font partie de préférence du même réseau d'appartenance (celui du terminal appelant ou celui du terminal appelé);
- ses moyens de contrôle peuvent être chargés, lorsqu'ils sont intégrés dans un équipement de service situé sur une frontière du réseau de communication, de supprimer les données d'information de décision qui sont contenues dans un message de signalisation provenant de l'extérieur du réseau ;
- ses moyens de contrôle peuvent être chargés, lorsqu'ils sont intégrés dans un équipement de service (tel qu'un « serveur d'application ») fonctionnant en mode dit « agent d'utilisateur dos à dos (ou « Back to Back User Agent ») - et donc comportant des « premier » et « second(s) » agents d'utilisateur propres à gérer et coordonner plusieurs dialogues SIP correspondant à la même communication -, et lorsque le « premier » agent d'utilisateur reçoit un message de signalisation contenant des données d'information de décision, d'ordonner au(x) « second(s) agent(s) d'utilisateur de reporter (ou de transférer) ces données d'information de décision dans la signalisation SIP qu'il(s) génère(nt) (mode de fonctionnement dit « back to back ») ;
- ses moyens de contrôle peuvent être chargés d'intégrer les données d'information dans un entête dédié du message de signalisation ou dans un champ d'un entête de message de signalisation, comme par exemple un champ dit d'enregistrement de route (ou « record-route »), lorsque le protocole d'établissement de communication est le protocole de gestion de transmission de messages de signalisation appelé SIP ;
   - ses moyens de contrôle peuvent être chargés d'intégrer des données d'information complémentaires dans certains au moins desdits messages de signalisation contenant lesdites données d'information de décision. Par exemple, ces données d'information complémentaires sont représentatives d'un identifiant de l'équipement de service dans lequel est implanté le dispositif et/ou du type de service mis en oeuvre (comme par exemple la taxation au niveau du service, exclusive ou non exclusive de la taxation au niveau de la session).

L'invention propose également un équipement de service, pour un coeur de réseau de communication Internet, destiné à mettre en oeuvre des fonctions liées à la fourniture d'au moins un service de communication à au moins un terminal de communication et comprenant un dispositif de contrôle du type de celui présenté ci-avant.

Un tel équipement de service peut par exemple constituer une entité à protocole d'établissement de communication de type SIP, choisie parmi un serveur à fonction « proxy » (ou « proxy-SIP »), un serveur d'application(s) (ou « application server ») et une entité de type MRF (ou « Média Resources Function »).

L'invention est particulièrement bien adaptée, bien que de façon non exclusive, aux coeurs de réseau de communication Internet tels que IMS (pour « IP Multimédia Subsystem ») et MMD (pour « MultiMedia Domain »).

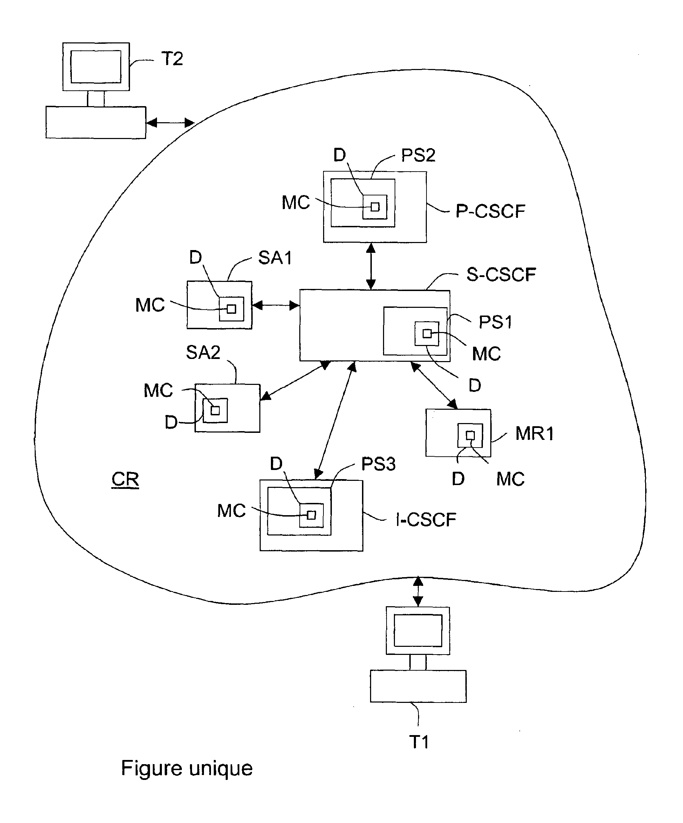

D'autres caractéristiques et avantages de l'invention apparaîtront à l'examen de la description détaillée ci-après, et du dessin annexé, sur lequel l'unique figure illustre de façon très schématique un coeur de réseau IP auquel sont connectés des proxy SIP, des serveurs d'application(s) et des entités MRF équipés d'un dispositif de contrôle selon l'invention. Le dessin annexé pourra non seulement servir à compléter l'invention, mais aussi contribuer à sa définition, le cas échéant.

L'invention a pour objet de permettre à un équipement de service, implanté dans un coeur de réseau Internet et capable de mettre en oeuvre au moins une fonction liée à la fourniture d'au moins un service de communication à au moins un terminal de communication (appelant ou appelé), de signaler à d'autres équipements de service qu'il se charge de mettre en oeuvre cette fonction pendant la durée d'une communication donnée.

Dans ce qui suit, on considère à titre d'exemple non limitatif que le coeur de réseau de communication Internet (ou IP) est de type IMS ou MMD, ou du type des dérivés de ces derniers (comme par exemple les réseaux définis par le groupe TISPAN de l'ETSI). Mais, l'invention n'est pas limitée à ce type de coeur de réseau. Elle concerne en effet tous les coeurs de réseau Internet appartenant, ou couplés, à un réseau de communication de type IP, comme par exemple un réseau PSTN ou PLMN.

Comme cela est très schématiquement illustré sur l'unique figure, un coeur de réseau CR peut comporter au moins un serveur à fonction « proxy » (ou « proxy-SIP ») PSi, au moins un serveur d'application(s) (ou « application server ») SAj et/ou au moins une entité de type MRF (ou « Media Resources Function ») MRk, chargés de fournir à des terminaux (appelant(s) ou appelé(s)) Tn des services relatifs à des communications.

Dans l'exemple non limitatif illustré, d'une première part, l'indice i est égal à 1 ou 2, mais il peut prendre n'importe quelle valeur non nulle, d'une deuxième part, l'indice j est égal à 1 ou 2, mais il peut prendre n'importe quelle valeur non nulle, d'une troisième part, l'indice k est égal à 1, mais il peut prendre n'importe quelle valeur non nulle, d'une quatrième part, l'indice n est égal à 1 ou 2, mais il peut prendre n'importe quelle valeur non nulle.

On considère dans ce qui suit que les terminaux de communication Tn sont des ordinateurs fixes ou portables. Mais, l'invention n'est pas limitée aux services de communications impliquant des terminaux appelant(s) et appelé(s) de ce type. Elle concerne en effet les services de communication impliquant tout équipement de communication, radio ou filaire, fixe ou mobile (ou portable) capable de se connecter à au moins un réseau IP, éventuellement par l'intermédiaire de passerelle(s), afin d'échanger des données sous la forme de signaux avec un autre équipement. Il pourra donc s'agir, par exemple, d'un téléphone fixe ou mobile, ou d'un assistant personnel numérique (ou PDA) équipé d'un module de communication, ou encore d'un serveur équipé d'un module de communication et pouvant éventuellement appartenir à l'opérateur qui délivre le service et contenant une fonction d'agent utilisateur (ou « User Agent »).

L'invention propose d'équiper certains au moins des équipements de service PSi, SAj et MRk, et de préférence tous (comme illustré), d'un dispositif de contrôle D comprenant un module de contrôle MC chargé, lorsque son équipement reçoit d'un terminal appelant ou appelé Tn une demande de fourniture d'un service de communication dans lequel il intervient, de décider (ou de refuser) de mettre en oeuvre au moins une fonction choisie parmi les fonctions qui sont assurées par son équipement, puis d'insérer dans la signalisation (c'est-à-dire dans certains au moins des messages de signalisation) qu'ils émettent pour une communication (ou session) donnée des données d'information signalant cette décision, à destination d'au moins certains autres équipements de service du coeur de réseau CR, afin qu'ils s'interdisent de mettre en oeuvre la fonction choisie pendant la durée de la communication donnée.

On considère dans ce qui suit, à titre d'exemple non limitatif, que la fonction objet d'une décision est une fonction de contrôle de facturation en ligne (ou « on-line charging »). Mais, l'invention n'est pas limitée à cette application. Un équipement de service est alors dit apte à mettre en oeuvre la fonction de contrôle de facturation en ligne lorsqu'il dispose de capacités internes lui permettant, d'une première part, de contacter un serveur de facturation en ligne, d'une deuxième part, de prévenir l'utilisateur final que son crédit va bientôt être nul ou est nul et que de ce fait le service de communication sera bientôt ou immédiatement arrêté ou suspendu, et d'une troisième part, de mettre fin au service de communication lorsque le crédit en ligne devient nul ou au contraire de reprendre un service de communication lorsque l'utilisateur a recrédité son compte auprès du serveur de facturation en ligne.

Par ailleurs, on considère dans ce qui suit que les messages de signalisation sont conformes à un protocole d'établissement de communication de type SIP (pour « Session Initiation Protocol » - protocole d'initiation de session), qui permet de créer et gérer des sessions d'échange de données (sous toute forme), notamment interactives et en temps réel, entre équipements de service, indépendamment de la nature des données et du protocole de transport utilisé pour transporter lesdites données.

Dans ce cas, la demande d'accès au service, qui est transmise par un terminal Tn à un proxy SIP PSi, se présente sous la forme d'un message d'établissement d'appel SIP de type « SIP INVITE ». Il est rappelé qu'un message INVITE contient un « SDP » décrivant les différents médias que supporte un terminal appelant, et que consécutivement à la réception de ce message INVITE s'effectue une négociation entre équipements pour déterminer le ou les médias qui seront utilisés pendant la session.

Dans l'exemple illustré l'indice i est compris entre 1 et 3 (PS1 à PS3), mais il peut prendre n'importe quelle valeur non nulle.

Dans un réseau IMS ou MMD, les proxy SIP PSi, qui ne sont pas placés sur une frontière dudit réseau, sont généralement implantés dans un équipement appelé S-CSCF (pour « Serving-Call Session Control Function »).

De préférence, c'est le serveur d'application(s) SAj qui est invoqué par un proxy SIP PSi, consécutivement à la réception d'une demande d'accès à un service, qui décide en premier de mettre en oeuvre (ou de ne pas mettre en oeuvre) sa fonction de facturation en ligne. Cela est préférable dans la mesure où c'est le serveur d'application(s) dédié au service qui connaît et gère les canaux de communication média permettant de communiquer avec le terminal de l'utilisateur final et qui est chargé de l'échange avec ce terminal, et non pas le proxy SIP PSi qui invoque ce serveur d'application(s) SAj et qui est chargé de la coordination des appels entre le terminal Tn demandeur et ledit serveur d'application(s).

Les données d'information de décision, qui sont placées dans un message de signalisation par le module de contrôle MC consécutivement à la décision de « prendre la main » sur une fonction (ici la fonction de facturation en ligne), peuvent se présenter sous n'importe quelle forme, et notamment sous la forme d'une marque, ou d'un signe, ou encore d'un chiffre ou d'un mot.

Par ailleurs, le module de contrôle MC peut par exemple intégrer les données d'information de décision dans un nouvel entête dédié (et standardisé) du message de signalisation ou dans un champ existant d'un entête de message de signalisation. Dans le premier cas, l'ajout d'un nouvel entête à un message de signalisation est immédiat dans le mesure où le protocole SIP est de type textuel. Dans le second cas, le champ d'entête, dans lequel on intègre les données d'information de décision, est par exemple le champ dit d'enregistrement de route (ou « record-route »).

En outre, les données d'information de décision sont par exemple intégrées par le module de contrôle MC dans le message de signalisation SIP qui initie un dialogue SIP (ou « SIP dialog »), par exemple dans le cas d'un appel ou d'un message instantané (ou « instant message »).

Il est important de noter que le module de contrôle MC peut être éventuellement chargé d'intégrer des données d'information complémentaires dans certains au moins des messages de signalisation qui contiennent les données d'information de décision. De telles données d'information complémentaires peuvent, par exemple, être représentatives de l'identifiant, au sein du coeur de réseau CR, de l'équipement de service dans lequel il est implanté, et/ou du type de service mis en oeuvre (comme par exemple la taxation au niveau du service, exclusive ou non exclusive de la taxation au niveau de la session).

Chaque message de signalisation contenant des données d'information de décision est communiqué par le proxy SIP PSi, qui a invoqué le serveur d'application(s) SAj [ou un MRF, ou encore le proxy SIP lui-même] qui l'a généré, à au moins certains autres équipements de service. Préférentiellement, le proxy SIP PSi communique ce message de signalisation à l'ensemble des équipements de service IMS (PSi', SAj' et MRk) qui sont implantés dans le coeur de réseau CR du réseau d'appartenance soit du terminal appelant impliqué dans la communication (ou session), soit du terminal appelé impliqué dans cette communication (ou session), c'est-à-dire à tous les équipements de service qui sont situés du côté appelant ou du côté appelé d'une session.

Ainsi, tous ces équipements de service sont avertis du fait qu'un serveur d'application(s) (ou un MRF, ou encore un proxy SIP) se charge de mettre en oeuvre la fonction de facturation en ligne pour la communication considérée (et pour la partie de session concernée) et donc qu'ils n'ont pas en principe à s'en charger. L'expression « en principe » est ici utilisée pour des situations très particulières dans lesquelles un équipement de service doit soit prendre le relais d'un autre équipement de service pour la mise en oeuvre de la facturation en ligne, soit assurer en parallèle cette mise en oeuvre. Lorsqu'une telle situation survient, les équipements de service en sont avertis, par exemple grâce aux données d'information complémentaires précisant par exemple le type de taxation en ligne mis en oeuvre.

Lorsque le dispositif de contrôle D est implanté dans un proxy SIP PSi situé sur une frontière du réseau (soit du côté accès, soit du côté du réseau situé à l'interface réseau/utilisateur, comme c'est le cas lorsque le proxy SIP est implanté dans un équipement de type P-CSCF (pour « Proxy-Call Session Control Function ») ou I-CSCF (pour « Interrogating-Call Session Control Function ») d'un réseau IMS ou MMD), son module de contrôle MC est préférentiellement agencé pour supprimer les données d'information de décision qui sont contenues dans des messages de signalisation provenant de l'extérieur de leur réseau (et donc provenant d'un terminal ou d'un autre réseau).

Cette option est destinée à éviter des fraudes, et notamment à éviter que des « hackers » véhiculent de fausses informations afin de bénéficier sans autorisation (ici gratuitement) d'une fonction (ici de communication).

Par ailleurs, certains serveurs d'application(s) peuvent fonctionner en mode dit « agent d'utilisateur dos à dos » (ou « Back to Back User Agent »). Dans ce cas, comme le sait l'homme de l'art, ils comportent des « premier » et « second(s) » agents d'utilisateur pouvant gérer et coordonner plusieurs dialogues SIP correspondant à une même communication, le premier agent d'utilisateur étant chargé de recevoir des messages de signalisation en provenance d'un terminal et le(s) second(s) agent(s) d'utilisateur étant chargé(s) de générer des messages à destination d'autres terminaux, compte tenu des messages de signalisation reçus par le premier agent d'utilisateur. Cette configuration est connue sous l'expression anglaise « back to back user agent »).

Dans cette configuration, lorsque le premier agent d'utilisateur reçoit un message de signalisation contenant des données d'information de décision, le module de contrôle MC, du dispositif D implanté dans le serveur d'application(s), est chargé d'ordonner au(x) second(s) agent(s) d'utilisateur de reporter (ou de transférer) ces données d'information de décision dans la signalisation SIP qu'il(s) génère(nt).

On notera que certaines données d'information complémentaires, comme par exemple l'identifiant de l'équipement décidant de mettre en oeuvre un service ou une partie d'un service (lorsque celui-ci se décompose en plusieurs types) et/ou l'identifiant de la fonction (service) mise en oeuvre par cet équipement, peuvent être stockées par les équipements, qui reçoivent les messages de signalisation qui les contiennent. Ce stockage peut par exemple se faire dans ce que l'homme de l'art appelle le ticket de taxation, lequel est mis en oeuvre pour certaines au moins des communications par certains équipements récepteurs.

Le dispositif de contrôle D selon l'invention, et notamment son module de contrôle MC, peut être réalisé sous la forme de circuits électroniques, de modules logiciels (ou informatiques), ou d'une combinaison de circuits et de logiciels.

L'invention ne se limite pas aux modes de réalisation de dispositif de contrôle et d'équipement de service décrits ci-avant, seulement à titre d'exemple, mais elle englobe toutes les variantes que pourra envisager l'homme de l'art dans le cadre des revendications ci-après.

## Revendications

1. Dispositif de contrôle (D) pour un équipement de service (PSi, SAj, MRk) propre à mettre en oeuvre, au sein d'un coeur de réseau de communication Internet (CR), des fonctions liées à la fourniture d'au moins un service de communication à au moins un terminal de communication (Tn), **caractérisé en ce qu'**il comprend des moyens de contrôle (MC) agencés, en cas de réception d'une demande de fourniture dudit service pour une communication donnée, pour décider de mettre en oeuvre au moins une fonction choisie parmi lesdites fonctions, puis pour insérer dans l'un au moins des messages de signalisation, que ledit équipement émet pour cette communication, des données d'information signalant cette décision à destination d'au moins certains autres équipements de service (PSi, SAj, MRk) dudit coeur de réseau (CR), de sorte qu'ils s'interdisent de mettre en oeuvre ladite fonction choisie pendant la durée de ladite communication donnée.

2. Dispositif selon la revendication 1, **caractérisé en ce que** lesdits certains autres équipements de service (PSi, SAj, MRk) dudit coeur de réseau (CR) appartiennent au réseau d'appartenance soit du terminal appelant (T1) soit du terminal appelé (T2) impliqués dans ladite communication donnée.

3. Dispositif selon l'une des revendications 1 et 2, **caractérisé en ce que** lesdits moyens de contrôle (MC) sont agencés, lorsqu'ils sont intégrés dans un équipement de service (PSi) situé sur une frontière dudit réseau de communication, pour supprimer lesdites données d'information de décision contenues dans un message de signalisation provenant de l'extérieur dudit réseau.

4. Dispositif selon l'une des revendications 1 à 3, **caractérisé en ce que** lesdits moyens de contrôle (MC) sont agencés, lorsqu'ils sont intégrés dans un équipement de service (SAj) comportant des premier et second(s) agents d'utilisateur propres à gérer et coordonner plusieurs dialogues SIP correspondant à une même communication, et lorsque ledit premier agent d'utilisateur reçoit un message de signalisation contenant lesdites données d'information de décision, pour ordonner au(x)dit(s) second(s) agent(s) d'utilisateur de reporter ces données d'information de décision dans la signalisation SIP qu'il(s) génère(nt).

5. Dispositif selon l'une des revendications 1 à 4, **caractérisé en ce que** lesdits moyens de contrôle (MC) sont agencés pour intégrer lesdites données d'information dans un entête dédié dudit message de signalisation.

6. Dispositif selon l'une des revendications 1 à 4, **caractérisé en ce que** lesdits moyens de contrôle (MC) sont agencés pour intégrer lesdites données d'information dans un champ d'un entête de message de signalisation.

7. Dispositif selon la revendication 6, **caractérisé en ce qu'**en présence d'un protocole d'établissement de communication de type SIP gérant la transmission des messages de signalisation, ledit champ est un champ dit d'enregistrement de route.

8. Dispositif selon l'une des revendications 1 à 7, **caractérisé en ce que** lesdits moyens de contrôle (MC) sont agencés pour intégrer des données d'information complémentaires dans certains au moins desdits messages de signalisation contenant lesdites données d'information de décision.

9. Dispositif selon la revendication 8, **caractérisé en ce que** lesdits moyens de contrôle (MC) sont agencés pour intégrer des données d'information complémentaires représentatives d'un identifiant de l'équipement de service (PSi, SAj, MRk) dans lequel est implanté ledit dispositif (D) et/ou du type de service mis en oeuvre.

10. Dispositif selon la revendication 9, **caractérisé en ce que** ledit type de service est une taxation au niveau du service, exclusive ou non exclusive d'une taxation au niveau de la session.

11. Dispositif selon l'une des revendications 1 à 10, **caractérisé en ce que** ladite fonction choisie est dédiée à la facturation des terminaux appelants et/ou appelés (Tn).

12. Dispositif selon la revendication 11, **caractérisé en ce que** ladite fonction choisie est dédiée à la facturation dite « en ligne » des terminaux appelants et/ou appelés (Tn).

13. Equipement de service (Sli, SAj, MRk) pour un coeur de réseau de communication Internet (CR), ledit équipement étant propre à mettre en oeuvre des fonctions liées à la fourniture d'au moins un service de communication à au moins un terminal de communication (Tn), **caractérisé en ce qu'**il comprend un dispositif de contrôle (D) selon l'une des revendications précédentes.

14. Equipement de service selon la revendication 13, **caractérisé en ce qu'**il constitue une entité à protocole d'établissement de communication de type SIP, choisie dans un groupe comprenant au moins un serveur à fonction « proxy », un serveur d'application(s) et une entité de type MRF (« Media Resources Function »).

15. Utilisation des dispositif de contrôle (D) et équipement de service (PSi, SAj, MRk) selon l'une des revendications précédentes dans les coeurs de réseau de communication Internet choisis dans un groupe comprenant IMS et MMD.

## Patentansprüche

1. Steuervorrichtung (D) für eine Diensteeinrichtung (PSi, SAj, MRk), welche für das Ausführen von mit der Bereitstellung mindestens eines Kommunikationsdienstes an mindestens ein Kommunikationsendgerät (Tn) verbundenen Funktionen innerhalb eines Kerns eines Internet-Kommunikationsnetzwerks (CR) geeignet ist, **dadurch gekennzeichnet, dass** sie Steuermittel (MC) umfasst, welche dazu ausgelegt sind, im Falle des Empfangs einer Anforderung für die Bereitstellung des besagten Dienstes für eine gegebene Verbindung zu entscheiden, zumindest eine unter den besagten Funktionen ausgewählte Funktion auszuführen und anschließend in zumindest eine der Signalisierungsnachrichten die Angabe einzufügen, dass die besagte Einrichtung für diese Verbindung Informationsdaten ausstrahlt, welche diese Entscheidung an zumindest bestimmte weitere Diensteeinrichtungen (PSi, SAj, MRk) des besagten Netzwerkkerns (CR) signalisieren, so dass sich diese verbieten, die besagte ausgewählte Funktion während der Dauer der besagten gegebenen Verbindung auszuführen.

2. Vorrichtung nach Anspruch 1, **dadurch gekennzeichnet, dass** die besagten bestimmten weiteren Diensteeinrichtungen (PSi, SAj, MRk) des besagten Netzwerkkerns (CR) dem Heimnetzwerk entweder des rufenden Endgeräts (T1) oder des gerufenen Endgeräts (T2), welche an der besagten gegebenen Verbindung beteiligt sind, angehören.

3. Vorrichtung nach einem der Ansprüche 1 und 2, **dadurch gekennzeichnet, dass** die besagten Steuermittel (MC), wenn sie in einer Diensteeinrichtung (PSi), die sich an einer Grenze des besagten Kommunikationsnetzwerks befindet, integriert sind, dazu ausgelegt sind, die besagten in einer Signalisierungsnachricht, welche von außerhalb des besagten Netzwerks stammt, enthaltenen Entscheidungsinformationsdaten zu löschen.

4. Vorrichtung nach einem der Ansprüche 1 bis 3, **dadurch gekennzeichnet, dass** die besagten Steuermittel (MC), wenn sie in einer Diensteeinrichtung (SAj), welche einen ersten und einen zweiten/zweite Benutzeragenten, die für die Verwaltung und die Koordination mehrerer einer selben Verbindung entsprechenden SIP-Dialoge geeignet sind, integriert sind, und wenn der besagte erste Benutzeragent eine Signalisierungsnachricht mit den besagten Entscheidungsinformationsdaten empfängt, dazu ausgelegt sind, dem/den besagten zweiten Benutzeragenten zu befehlen, diese Entscheidungsinformationsdaten in der SIP-Signalisierung, die er/sie erzeugt/erzeugen, aufzuführen.

5. Vorrichtung nach einem der Ansprüche 1 bis 4, **dadurch gekennzeichnet, dass** die besagten Steuermittel (MC) dazu ausgelegt sind, die besagten Informationsdaten in einen dedizierten Header der besagten Signalisierungsnachricht zu integrieren.

6. Vorrichtung nach einem der Ansprüche 1 bis 4, **dadurch gekennzeichnet, dass** die besagten Steuermittel (MC) dazu ausgelegt sind, die besagten Informationsdaten in einem Feld eines Headers der Signalisierungsnachricht zu integrieren.

7. Vorrichtung nach Anspruch 6, **dadurch gekennzeichnet, dass** bei Vorhandensein eines Verbindungsaufbauprotokolls vom Typ SIP, welches die Übertragung der Signalisierungsnachrichten verwaltet, das besagte Feld ein sogenanntes Routenregistrierungsfeld ist.

8. Vorrichtung nach einem der Ansprüche 1 bis 7, **dadurch gekennzeichnet, dass** die besagten Steuermittel (MC) dazu ausgelegt sind, zusätzliche Informationsdaten zumindest in bestimmte der besagten Signalisierungsdaten, welche die besagten Entscheidungsinformationsdaten enthalten, zu integrieren.

9. Vorrichtung nach Anspruch 8, **dadurch gekennzeichnet, dass** die besagten Steuermittel (MC) dazu ausgelegt sind, zusätzliche Informationsdaten, die für eine Kennung der Diensteeinrichtung (PSi, SAj, MRk), in welcher die besagte Vorrichtung (D) installiert ist, und/oder für den Typ des ausgeführten Dienstes repräsentativ sind, zu integrieren.

10. Vorrichtung nach Anspruch 9, **dadurch gekennzeichnet, dass** der besagte Diensttyp eine Gebührenverrechnung in Bezug auf den Dienst, ausschließlich oder nicht ausschließlich einer Gebührenverrechnung in Bezug auf die Sitzung, ist.

11. Vorrichtung nach einem der Ansprüche 1 bis 10, **dadurch gekennzeichnet, dass** die besagte gewählte Funktion der Gebührenabrechnung der rufenden und/oder gerufenen Endgeräte (Tn) dediziert ist.

12. Vorrichtung nach Anspruch 11, **dadurch gekennzeichnet, dass** die besagte gewählte Funktion der sogenannten "Online"-Gebührenabrechnung der rufenden und/oder gerufenen Endgeräte (Tn) dediziert ist.

13. Diensteeinrichtung (PSi, SAj, MRk) für einen Kern eines Internet-Kommunikationsnetzwerks (CR), wobei die besagte Einrichtung geeignet ist, mit der Bereitstellung mindestens eines Kommunikationsdienstes an mindestens ein Kommunikationsendgerät (Tn) verbundene Funktionen auszuführen, **dadurch gekennzeichnet, dass** sie eine Steuereinrichtung (D) gemäß einem der vorstehenden Ansprüche umfasst.

14. Diensteeinrichtung nach Anspruch 13, **dadurch gekennzeichnet, dass** sie eine Entität mit Verbindungsaufbauprotokoll vom Typ SIP bildet, gewählt in einer Gruppe, welche mindestens einen Server mit "Proxy"-Funktion, einen Anwendungsserver und eine Entität vom Typ MRF ("Medienressourcenfunktion") umfasst.

15. Verwendung der Steuervorrichtungen (D) und der Diensteeinrichtung (PSi, SAj, MRk) gemäß einem der vorstehenden Ansprüche in den Kernen eines Internet-Kommunikationsnetzwerks, gewählt in einer Gruppe, welche IMS und MMD umfasst.

## Claims

1. A control device (D) for service equipment (PSi, SAj, MRk) capable of implementing, within an Internet communication core network (CR), functions related to providing at least one communication service to at least one communication terminal (Tn), **characterized in that** it comprises control means (MC) arranged, in the event that a request to supply said service is received for a given communication, to decide to implement at least one function chosen from among said functions, then to insert within at least one of the signalling messages, which said equipment transmits for that communication, information data signalling that decision to at least some other service equipment (PSi, SAj, MRk) of said core network (CR), so that said equipment refrains from implementing said chosen function during the course of said given communication.

2. A device according to claim 1, **characterized in that** said other service equipment (PSi, SAj, MRk) of said core network (CR) belongs to the same network as either the calling terminal (T1) or the called terminal (T2) involved in said given communication.

3. A device according to one of the claims 1 and 2 **characterized in that** said control means (MC) are arranged, when integrated into service equipment (PSi) located on a border of said communication network, to delete said decision information data contained within a signalling message coming from outside said network.

4. A device according to one of the claims 1 to 3, **characterized in that** said control means (MC) are arranged, when integrated into service equipment (SAj) comprising first and second user agents capable of managing and coordinating multiple SIP dialogs corresponding to a single communication, and whenever said first user agent receives a signalling message containing said decision information data, to order said second user agent(s) to report that decision information data in the SIP signal that it/they generate(s).

5. A device according to one of the claims 1 to 4, **characterized in that** said control means (MC) are arranged to integrate said information data into a dedicated entity of said signalling message.

6. A device according to one of the claims 1 to 4, **characterized in that** said control means (MC) are arranged to integrate said information data into a field of a signalling message header.

7. A device according to claim 6, **characterized in that** in the presence of a SIP communication establishment protocol managing the transmission of signalling messages, said field is a so-called Record-Route field.

8. A device according to one of the claims 1 to 7, **characterized in that** said control means (MC) are arranged to integrate additional information data into at least some of said signalling messages containing said decision information data.

9. A device according to claim 8, **characterized in that** said control means (MC) are arranged to integrate additional information data representative of a service equipment (PSi, SAj, MRk) identifier in which said device (D) is installed and/or of the type of service implemented.

10. A device according to claim 9, **characterized in that** said type of service is service-level billing, exclusive or nonexclusive of session-level billing.

11. A device according to one of the claims 1 to 10, **characterized in that** said chosen function is dedicated to the invoicing of calling and/or called terminals (Tn).

12. A device according to claim 11, **characterized in that** said chosen function is dedicated to so-called "online billing" of calling and/or called terminals (Tn).

13. Service equipment (PSi, SAj, MRk) for an Internet communication core network (CR), said equipment being capable of implementing functions related to providing at least one communication service to at least one communication terminal (Tn), **characterized in that** it comprises a control device (D) according to one of the preceding claims.

14. Service equipment according to claim 13, **characterized in that** it constitutes a SIP communication establishment protocol entity, chosen from a group comprising at least one proxy server, one application server, and one MRF ("Media Resources Function") entity.

15. Use of the control device (D) and service equipment (PSi, SAj, MRk) according to any one of the preceding claims in Internet communication core networks chosen from a group comprising IMS and MMD.
